# EUROPÄISCHE PATENTSCHRIFT

(11) **EP 3 583 853 B1**
(45) Veröffentlichungstag und Bekanntmachung des Hinweises auf die Patenterteilung: **06.01.2021**
(21) Anmeldenummer: 19178368.7
(22) Anmeldetag: 05.06.2019
(51) Int. Cl.: A23C 19/032, A23C 19/05, A23C 19/076, A23C 21/02, A23C 21/00, A23C 9/142, B01D 61/58, B01D 61/02, B01D 61/14

(54) **VERFAHREN ZUR HERSTELLUNG VON SAUERMOLKE MIT VERMINDERTEM LACTOSEGEHALT**
METHOD FOR PRODUCING ACID WHEY WITH REDUCED LACTOSE CONTENT
MÉTHODE POUR LA PRODUCTION DU LACTOSÉRUM ACIDE A TENEUR REDUITE EN LACTOSE

(30) Priorität: 18.06.2018 EP 18178274
(43) Veröffentlichungstag der Anmeldung: 25.12.2019
(73) Patentinhaber: DMK Deutsches Milchkontor GmbH, 27404 Zeven (DE)
(72) Erfinder: DÖRING, Sven-Rainer, 27404 Zeven (DE)
(74) Vertreter: Fabry, Bernd

(56) Entgegenhaltungen:
- EP-A1- 2 839 749
- EP-A1- 2 989 897
- EP-A1- 3 251 515
- EP-A1- 3 476 220
- EP-A2- 0 056 658
- DE-A1-102012 100 495
- DE-U1- 9 411 450
- US-A1- 2007 166 447
- 2 3 ET AL: "GEA Process Engineering Membrane Filtration in the Dairy Industry engineering for a better world GEA Filtration GEA Filtration Global -Yet Local", , 1. Januar 2012 (2012-01-01), XP055269252, Gefunden im Internet: URL:http://www.gea.com/global/en/binaries/ Membrane Filtration in the Dairy Industry_tcm11-18227.pdf [gefunden am 2016-04-28]
- Germano Mucchetti ET AL: "The pre-concentration of milk by nanofiltration in the production of Quarg-type fresh cheeses", Lait, 1. Januar 2000 (2000-01-01), Seiten 43-50, XP055087166, DOI: 10.1051/lait:2000106 Gefunden im Internet: URL:http://lait.dairy-journal.org/articles /lait/pdf/2000/01/L0107.pdf [gefunden am 2013-11-07]

## Beschreibung

### GEBIET DER ERFINDUNG

Die Erfindung befindet sich auf dem Gebiet der Milchindustrie und betrifft ein verbessertes Verfahren zur Herstellung von Frischkäse, bei dem weniger Lactose über die Sauermolke verloren geht.

### HINTERGRUND DER ERFINDUNG

Zur Herstellung von Quark oder Frischkäse - die beiden Begriffe werden im Folgenden synonym verwendet - wird in der Regel entrahmte Milch einer Temperaturbehandlung unterworfen und die enthaltenen Proteine denaturiert.

Durch die anschließende Zugabe von Milchsäurebakterien und Lab erfolgt die so genannte Dicklegung (Phasenumkehrung) der Milch. Das Casein gerinnt und bildet die fachlich bezeichnete Gallerte aus. Nach der Reifung (8 bis 20 h) wird die Gallerte aufgerührt. Hierdurch die Molkenabtrennung ausgelöst und im Separator werden dann die beiden Phasen getrennt. Die flüssige Sauermolke wird anderweitig verarbeitet und die Quarkgrundmasse durch Zugabe von Sahne auf den gewünschten Fett- und Proteingehalt eingestellt.

Dominiert werden die technischen Herstellverfahren durch entsprechende Separierverfahren. Durch Variation der Separierbedingungen und technische Modifikationen der Separatoren ist derzeit eine Vielfalt von Verfahrensausgestaltungen möglich. Der Magermilcheinsatz liegt bei einem Eiweißgehalt der Magermilch von 3,3 bis 3,5 Gew.-% im Bereich von 4,10 bis 4,15 kg Magermilch je Kilogramm zu produzierendem Magerquark oder Frischkäse (4,10 bis 4,15 kg Magermilch/kg Magerquark), wenn letztere 18 % Trockenmasse aufweisen. Somit fallen 3,10 bis 3,15 kg Sauermolke je Kilogramm Magerquark an (3,10 bis 3,15 kg Sauermolke/kg Magerquark). Der Eiweißgehalt erreicht dabei Größenordnungen von 12,6 bis 12,8 Gew.-%.

Bei der Herstellung von Frischkäse wird in der Regel von Rohmilch mit einem Fettgehalt von 4,5 Gew.-% und einem Lactosegehalt von 4,3 bis 4,7 ausgegangen. Im ersten Schritt wird der Rahm abgetrennt und eine Magermilch erhalten, die einen Proteinanteil von 3,3 bis 3,5 Gew.-% aufweist. Diese wird einer Ultrafiltration unterworfen, bei der die Lactose als Permeat abgetrennt wird und als Retentat ein Milchproteinkonzentrat (MPC) erhalten wird, welches 18 Gew.-% Trockenmasse (TM), 12 Gew.-% Proteine und immer noch 4,7 Gew.-% Lactose aufweist.

Das MPC wird zusammen mit der Magermilch der Fermentation zugeführt. Anschließend wird die Sauermolke von Frischkäse abgetrennt, wobei letzterer einen Proteingehalt von etwa 12 Gew.-% aufweist.

Die Sauermolke, die im Wesentlichen ein Abfallprodukt ist, weist eine Trockenmasse von 5,5 Gew.-% und einen Lactosegehalt von 4 bis 4,5 Gew.-% auf; diese Lactose geht also verloren.

Man könnte zwar die Lactose aus der Sauermolke auskristallisieren, die Ausbeuten sind jedoch gering, da die Milchsäure die Kristallbildung stört.

### STAND DER TECHNIK

Aus der US 2003/0129275 A1 (LACT INNOVATION) ist bekannt, dass bei der Käse- und Quarkherstellung auch die Mikrofiltration und Ultrafiltrationsschritte eingesetzt werden können. Die Anwendung der Mikrofiltration auf Magermilch zur Herstellung von Käse und Molkeproteinprodukten wird beispielsweise in der US 2003/0077357 A1 (CORNELL RES FOUNDATION) beschrieben.

Aus der EP 1752046 A1 **(TUCHENHAGEN)** ist ein Verfahren zur Herstellung von fermentierten Milchprodukten bekannt, bei dem man Prozessmilch fermentiert, das Fermentationsprodukt einer Mikrofiltration unterwirft und nur das gesäuerte Retentat weiterverarbeitet.

In ihrem Aufsatz mit dem Titel *"*The pre-concentration of milk by nanofiltration in the production of Quark-type fresh cheeses" beschreiben MUCCHATTO ET AL den Einfluss der Anwendung einer zuvor nanofiltrierten Milch auf die Eigenschaften eines Quarks, welcher aus dieser nanofiltrierten Milch hergestellt wird. Vorversuche des Nanofiltrationsverfahrens wurden mit wässrigen Lösungen von NaCl, CaCl₂, MgSO₄, Na₂SO₄ Laktose und Vollmilch durchgeführt. Der Herstellungsweg entspricht dem Standard Herstellverfahren von Quark, wobei lediglich statt Magermilch im Sinne der vorliegenden Anmeldung ein aus der Nanofiltration von Vollmilch resultierendes Retentat verwendet wird. [vgl. LAIT VOL. 80 (1), S. 43-50 (2000**)]**

In DEUTSCHE MILCHWIRTSCHAFT VOL 48(2), S. 36-41 (1997**)** wird ein Verfahren zur Frischkäseherstellung offenbart, bei dem die Magermilch durch Nanofiltrieren konzentriert wird. Anschließend wird die Milch bei 80 °C für sieben Minuten erhitzt, anschließend bei 30 °C in eine ausgewählte Kulturenkombination eingerührt und dann für 14 bis 16 Stunden fermentiert. Nach der Fermentation wird die gewünschte Trockenmasse des Endproduktes durch Ultrafiltrieren oder Separieren eingestellt.

Die EP 1364582 A1 betrifft ein gesäuertes Milchprodukt, dessen wesentlicher Bestandteil Milch und/oder Magermilch und/oder Molke darstellt. Konkret beansprucht werden gesäuerte Michprodukte, welche durch Entzug von einwertigen Ionen und Wasser mittels Nanofiltration aus Milch- und/oder Molke-Ausgangsprodukten erhalten werden

Ferner wird in der EP 2796051 A1 (DMK) zur Verbesserung der geschmacklichen Qualität von Frischkäse oder Quark vorgeschlagen, Magermilch zunächst einer gekoppelten Ultra- und Filtration zu unterwerfen und das dabei anfallende Permeat einer Fällungsdemineralisierung zu unterwerfen, und das mineralstoffarme Filtrat mit dem proteinreichen Retentat aus der Ultrafiltration zu vereinigen, ehe diese Mischung dann denaturiert, fermentiert und standardisiert wird. Nachteilig ist hierbei jedoch, dass die Abtrennung einwertiger Kationen, speziell Natrium, nicht vollständig erfolgt und das resultierende Produkt daher eine Rest-Bitterkeit besitzt. Zudem ist die Fällung der Calciumsalze technisch aufwendig und entsprechend teuer.

EP2989897 A1 (DMK) offenbart ein Verfahren zur Hestellung von farblose Kesselmilch,bei dem man (a) Kesselmilch einer Ultrafiltration unterwirft und dabei ein erstes Permeat P1 und ein erstes Retentat R1 herstellt, wobei man die Ultrafiltration mit Hilfe von Membranen durchführt, die einen Porendurchmesser von 5.000 bis 50.000 Dalton aufweisen, (b) das Permeat P1 einer Umkehrosmose unterwirft und dabei ein zweites Permeat P2 und ein zweites Retentat R2 herstellt, wobei man die Umkehrosmose mit semipermeablen Membranen durchgeführt, die eine Trennschärfe von 10 bis 1.000 Dalton aufweisen, (c) das zweite Retentat R2 mit einem Adsorptionsmittel behandelt und dabei ein weiteres Retentat R2<*>herstellt, (d) das so erhaltene Retentat R2<*>mit dem Retentat R1 und dem Permeat P2 vereinigt.

DE9411450 U1 (DELTA PATENT INVEST AG) offenbart lactoseabgereicherte Molkepräparate, die durch Fermentation von Molke unter Verwendung eines Lactose abbauenden Mikroorganismus und Neutralisation des Reaktionsgemischs mit einer Base erhalten sind, durch die Verwendung eines oder mehrerer Mikroorganismen der Gattung Streptococcus als Lactose abbauende Mikroorganismen und Einstellung und Aufrechterhaltung eines pH-Wertes im Bereich von 4,0 bis 8,5 während der gesamten Dauer der Fermentation durch entsprechenden Zusatz der Base.

EP3476220 A1 (DMK) offenbart ein Verfahren zur Herstellung einer mineralarmen Quarkgrundmasse, umfassend die folgenden Schritte: (a) Erzeugen einer Magermilch durch Temperaturbehandlung einer Rohmilch und Abtrennung des Rahms; (b) Unterwerfen der so erzeugten Magermilch einer Ultrafiltration, einer Mikrofiltration und/oder Umkehrosmose unter Erhalt eines proteinreichen Retentats R1 und eines lactosereichen Permeats P1; (c) Anreichern des Retentats R1 mit einer Menge Lactose, die der Menge entspricht, die zuvor in der Ultrafiltration als Permeat abgetrennt worden ist, (d) Temperaturbehandlung des so erzeugten Anreicherungsproduktes, bis Denaturierung eintritt, (e) Fermentieren des so erzeugten Denaturierungsproduktes durch Zugabe von Starterkulturen und Lab sowie (f) Einstellen des so erzeugten Fermentationsproduktes auf einen definierten Trockenmassen- nd Proteingehalt.

### AUFGABE DER ERFINDUNG

Die Aufgabe der vorliegenden Erfindung hat daher darin bestanden, das herkömmliche Verfahren zur Herstellung von Frischkäse so zu verändern, dass bei gleichem Proteingehalt im Frischkäse die Menge an Lactose, die mit der Sauermolke verloren geht, deutlich zu reduzieren. Konkret gewünscht ist, dass der Lactosegehalt in der Sauermolke deutlich unter 5 Gew.-% und vorzugsweise im Bereich von 1 bis 2 Gew.-% liegt.

### BESCHREIBUNG DER ERFINDUNG

### P2

Die Anmelderin hat als Ursache für den hohen Lactosegehalt den hohen Proteingehalt in der Fermentation erkannt. Die Eiweiße puffern die Milchsäurebildung ab, verlangsamen dadurch die Reaktion und ermöglichen, dass viel mehr Lactose in der Sauermolke gelöst wird.

Die überraschende Lösung besteht darin, die Magermilch zunächst einer Ultrafiltration zu unterwerfen und das als Retentat erhaltene Milchproteinkonzentrat wieder der Magermilch zuzusetzen, während das Permeat einer Umkehrosmose unterworfen wird. Das Retentat stellt ein Milchpermeatkonzentrat mit typisch etwa 18 Gew-% TM, etwa 16 Gew.-% Lactose und etwa 1,4 Gew.-% Asche dar und kann beispielsweise zur Standardisierung von Milchprodukten verwendet werden. Das Permeat wird als Diawasser in den Prozess zurückgeführt.

Die Mischung aus Magermilch und Milchproteinkonzentrat weist einen Proteingehalt von typisch etwa 10 Gew.-% und einen Lactosegehalt von etwa 4,7 Gew.-% auf. Durch die Zugabe des Diawassers werden beide Gehalte halbiert. Wird diese Mischung nun fermentiert, wird im Separator schließlich eine Sauermolke abgetrennt, die nur noch ungefähr 1,5 bis 1,8 Gew.-% Lactose enthält.

### HERSTELLVERFAHREN

Ein Gegenstand der Erfindung betrifft ein Verfahren zur Herstellung von Sauermolke die einen Lactosegehalt von 1,0 bis 2,0 Gew.-% und vorzugsweise von 1,5 bis 1,8 Gew.-% aufweist, umfassend oder bestehend aus den folgenden Schritten:
(a) Bereitstellen einer Magermilch;
(b) Ultrafiltration der Magermilch unter Erhalt einer lactosereichen Fraktion als erstem Permeat P1 und eines Milchproteinkonzentrats als erstem Retentat R1;
(c) Umkehrosmotische Behandlung des Permeats P1 aus Schritt (b) unter Erhalt von Diawasser als zweitem Permeat P2 und eines Milchproteinkonzentrats als zweitem Retentat R2;
(d) erstes Standardisieren des Milchproteinkonzentrats R1 aus Schritt (b) durch Zugabe von Magermilch;
(e) zweites Standardisieren der Mischung aus Schritt (d) durch Zugabe von Diawasser P2 aus Schritt (c);
(f) Fermentation der zweiten Mischung aus Schritt (e) in an sich bekannter Weise; sowie
(g) Separation des Fermentationsproduktes aus Schritt (f) in Frischkäse und Sauermolke.

### MAGERMILCHHERSTELLUNG

Zur Herstellung der Magermilch erfolgt zunächst eine Abtrennung von Nicht-Milchbestandteilen sowie die Entrahmung des Fettanteils von etwa 4 Gew.-% aus der Rohmilch. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können.¹ Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

Die Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### ULTRAFILTRATION

Im zweiten Verfahrensschritt wird die Magermilch mit Hilfe einer Ultrafiltration in ein Milchproteinkonzentrat, das als Retentat anfällt und ein lactosereiches Permeat aufgetrennt.

Unter dem Begriff Ultrafiltration wird eine Filtration durch Membranen mit einer Porengröße < 0,1 µm verstanden, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind.

Die Ultrafiltration erfolgt vorzugsweise bei Temperaturen im Bereich von 10 bis 55, vorzugsweise 10 bis 20 °C, wobei die Membranen vorzugsweise einen Porendurchmesser im Bereich von 1.000 bis 50.000 und vorzugsweise 5.000 bis 25.000 Dalton besitzen. Vorzugsweise handelt es sich um sogenannte Spiralwickelmembranen oder Platte-Rahmen-Module aus Polysulfon oder Polyethylenmembranen. ¹(http://www.westfalia-separator.com/de/anwendungen/molkereitechnik/milch-molke.html).

### UMKEHROSMOSE

An die Ultrafiltration schließt sich eine Umkehrosmose (RO) an. Hierbei die Lactosefraktion unter Einsatz einer halbdurchlässigen (semipermeablen) Membran entwässert und dadurch die Konzentration der wertvollen Lactose in dem resultierenden Milchpermeatkonzentrat auf 15 bis 20 Gew.-%, und typisch 16 Gew.-% erhöht. Das Prinzip besteht darin, das System einem Druck auszusetzen, der höher als der Druck ist, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen. Milch hat einen osmotischen Druck von weniger als 2 bar, der angewendete Druck für die Umkehrosmose von Milch beträgt 3 bis 30 bar, je nach verwendeter Membran und Anlagenkonfiguration. Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die Milchproteine zurückgehalten werden. Im Gegensatz zu einem klassischen Membranfilter verfügen Osmosemembranen nicht über durchgehende Poren.

Die Umkehrosmose wird vorzugsweise Umkehrosmose bei einer Temperatur im Bereich von 10 bis 55, vorzugsweise 12 bis 20 °C mit semipermeablen Membranen durchgeführt, die eine Trennschärfe von 0 bis 1.000 Dalton aufweisen. Der Konzentrierungsfaktor kann dabei 2 bis 100 und insbesondere 10 bis 50 betragen.

Das bei der Umkehrosmose anfallende Retentat wird als Diawasser bezeichnet und anteilweise wieder in das Verfahren zurückgeführt.

### STANDARDISIERUNG

Die Standardisierung erfolgt in zwei Schritten. Im ersten Teil wird dem Milchproteinkonzentrat Magermilch zugegeben und zwar vorzugsweise in einer solchen Menge, so dass die erste Mischung anschließend einen Proteingehalt von 8 bis 12 Gew.-% und einen Lactosegehalt von 4,5 bis 5,0 Gew.-% und insbesondere einen Proteingehalt von 10 Gew.-% und einen Lactosegehalt von 4,7 Gew.-% aufweist.

Anschließend erfolgt eine Verminderung sowohl des Protein- als auch des Lactosegehaltes durch Zugabe von Diawasser, das in einer solchen Menge eingesetzt wird, so dass die zweite Mischung einen Proteingehalt von 4 bis 6 Gew.-% und einen Lactosegehalt von 2,25 bis 2,5 Gew.-% und insbesondere einen Proteingehalt von 5 Gew.-% und einen Lactosegehalt von 2,3 bis 2,4 Gew.-% aufweist.

### FERMENTATION

Die Fermentation des standardisierten Vorproduktes kann nach den bekannten Verfahren des Stands der Technik erfolgen. Dazu werden geeignete Starterkulturen, vorzugsweise Milchsäurebakterien, und Lab zugesetzt. Als Starterkulturen eignen sich insbesondere probiotische Bakterien vom Typ *Bifido bakterium lactis B12* oder *Lactobazillus acidophilus* sowie mesophile Bakterien wie beispielsweise *Lactococcus lactis* oder *Leuconostoc cremoris.*

Besonders bevorzugt sind ferner die beiden folgenden Kulturen bestehend aus 5 bzw. 3 probiotischen Bakterien, nämlich:

### Mischung 1

(i-1) *Streptococcus thermophilus,*
(i-2) *Leuconostoc species,*
(i-3) *Lactococcus lactis subsp. lactis biovar diacetylactis,*
(i-4) *Lactococcus lactis subsp. lactis* und
(i-5) *Lactococcus lactis subsp. cremoris,* sowie

### Mischung 2

(ii-1) *Streptococcus thermophilus,*
(ii-2) *Lactococcus lactis subsp. lactis* und
(ii-3) *Lactococcus lactis subsp. cremoris*

### Vorzugsweise enthalten die Starterkulturen

- etwa 10 bis etwa 90 Gew.-%, vorzugsweise etwa 25 bis etwa 75 Gew.-% und insbesondere etwa 40 bis etwa 60 Gew.-% der Mischung (i) und
- etwa 90 bis etwa 10 Gew.-%, vorzugsweise etwa 75 bis etwa 25 Gew.-% und insbesondere etwa 60 bis etwa 40 Gew.-% der Mischung (ii)
mit der Maßgabe, dass sich die Mengenangaben zu 100 Gew.-% ergänzen.

Besonders bevorzugt sind Starterkulturen, die
- etwa 40 bis etwa 60 Gew.-% der Mischung (i) und
- etwa 60 bis etwa 40 Gew.-% der Mischung (ii)
mit der Maßgabe enthalten, dass sich die Mengenangaben zu 100 Gew.-% ergänzen.

In einer weiteren bevorzugten Ausführungsform sind die fünf Mikroorganismen, die die Mischung (i) bilden sowie die drei Mikroorganismen, die die Mischung (ii) bilden, in jeweils etwa gleichen Mengen enthalten. "Etwa gleich" ist in diesem Zusammenhang so zu verstehen, dass in der Mischung (i) die fünf Mikroorganismen jeweils in Mengen von 20 ± 5 Gew.-% und in der Mischung (ii) die drei Mikroorganismen jeweils in Mengen von 33 ± 5 Gew.-% enthalten sind. Statt die beiden im Handel erhältlichen Zubereitungen (i) und (ii) gemeinsam einzusetzen, ist es natürlich grundsätzlich auch möglich, die fünf Mikroorganismen einzeln zu verwenden und dann so abzumischen, dass eine Starterkulturmischung erhalten wird, mit der die geschmacklich verbesserten Quarkprodukte erhalten werden. Solche Starterkulturen enthalten dann vorzugsweise
- etwa 20 bis etwa 30 Gew.-% *Streptococcus thermophilus,*
- etwa 5 bis etwa 15 Gew.-% *Leuconostoc species,*
- etwa 5 bis etwa 10 Gew.-% *Lactococcus lactis subsp. lactis biovar diacetylactis,*
- etwa 20 bis etwa 30 Gew.-% *Lactococcus lactis subsp. lactis,*
- etwa 20 bis etwa 30 Gew.-% *Lactococcus lactis subsp. cremoris,* und
mit der Maßgabe, dass sich die Mengenangaben zu 100 Gew.-% ergänzen.

Besonders bevorzugt sind Starterkulturen enthaltend
- 25 Gew.-% *Streptococcus thermophilus,*
- 12 Gew.-% *Leuconostoc species,*
- 13 Gew.-% *Lactococcus lactis subsp. lactis biovar diacetylactis,*
- 25 Gew.-% *Lactococcus lactis subsp. lactis,*
- 25 Gew.-% *Lactococcus lactis subsp. cremoris*

Alle genannten Mikroorganismen sind im Handel frei verfügbar.

Die Temperatur, bei der die Fermentation erfolgt, richtet sich nach dem Temperaturbereich, der für die jeweilig verwendeten Mikroorganismen optimal ist; typisch liegt die Temperatur im Bereich von 18 bis 35 °C und vorzugsweise bei 30 °C.

### SEPARATION

Die Separation des Fermentationsproduktes in Quarkgrundmasse und Sauermolke kann ebenfalls in an sich bekannter Weise durch Abtropfen oder Abpressen oder Zentrifugation, gegebenenfalls gefolgt von einer Wäsche erfolgen.

Die so erhaltene Quarkgrundmasse weist anschließend einen Trockenmassengehalt von etwa 15 bis etwa 20 Gew.-% und insbesondere bei etwa 18 Gew.-% auf. Der Proteingehalt kann etwa 10 bis etwa 15 Gew.-% und vorzugsweise etwa 12 Gew.-% betragen. Falls erforderlich kann auch hier nachträglich beispielsweise durch Zugabe von Rahm standardisiert werden.

### GEWERBLICHE ANWENDBARKEIT

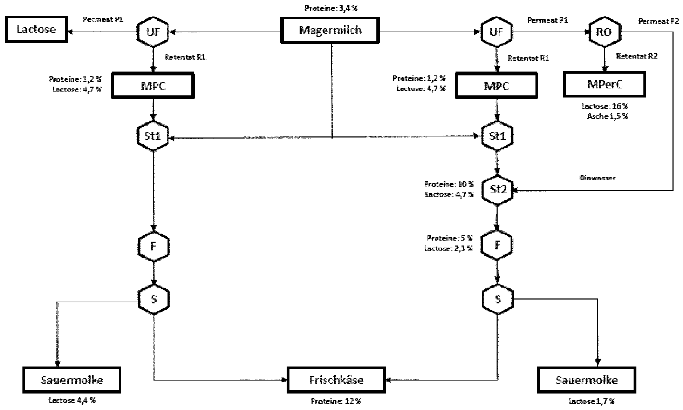

Die Erfindung wird im Folgenden durch die **Abbildung 1** näher erläutert, ohne sie darauf einzuschränken. Dabei stehen der linke Ast des Fließschemas für den herkömmlichen Stand der Technik und der rechte Ast für das Verfahren der Erfindung. Weiterhin bedeuten UF = Ultrafiltration, St = Standardisierung, F = Fermentation und S = Separation.

### BEISPIELE

### VERGLEICHSBEISPIEL V1

### Herstellung von Frischkäse und lactosereicher Sauermolke

4.000 kg Magermilch wurden bei 20 °C einer Ultrafiltration mit einer Spiralwickelmembran (Trennschärfe 25.000 Dalton) unterworfen. Das proteinreiche Retentat R1 enthielt 12 Gew.-% Proteine und 4,7 Gew.-% Lactose. Das lactosereiche Permeat P1 wurde abgetrennt und getrennt weiterverarbeitet.. Das Milchproteinkonzentrat wurde anschließend unter Zugabe von Magermilch standardisiert und auf einen Proteingehalt von 10 Gew.-% und einen Lactosegehalt von 4,7 Gew.-% eingestellt. Diese Mischung wurde mit Milchsäurebakterien gemäß Mischung (i) und Lab versetzt und bei 30 °C etwa 2 h gerührt. Anschließend wurde das Fermentationsprodukt in eine Zentrifuge gegeben und die Sauermolke als flüssiger Bestandteil abgetrennt. Die zurückgebliebene Quarkmasse wurde durch Zugabe von Sahne auf einen Fettgehalt von 40 Gew.-% in der Trockenmasse und einen Proteingehalt von 12 Gew.- % eingestellt. Die Sauermolke wies noch einen Rest-Lactosegehalt von 4,4 Gew.-% auf.

### BEISPIEL 1

### Herstellung von Frischkäse und lactosearmer Sauermolke

4.000 kg Magermilch wurden bei 20 °C einer Ultrafiltration mit einer Spiralwickelmembran (Trennschärfe 25.000 Dalton) unterworfen. Das proteinreiche Retentat R1 enthielt 12 Gew.-% Proteine und 4,7 Gew.-% Lactose. Das lactosereiche Permeat P1 wurde ebenfalls bei 20 °C einer Umkehrosmose mit einem Konzentrierungsfaktor von 10 unterworfen. Als Retentat R2 wurde ein Milchpermeatkonzentrat mit einer Trockenmasse von 18 Gew.-%, davon 16 Gew.-% Lactose und 1,5 Gew.-% Asche erhalten, das anschließend sprühgetrocknet wurde. Das Permeat P2 wurde als Diawasser abgenommen und in den Prozess zurückgeführt. Das Milchproteinkonzentrat wurde anschließend unter Zugabe von Magermilch standardisiert und auf einen Proteingehalt von 10 Gew.-% und einen Lactosegehalt von 4,7 Gew.-% eingestellt. Anschließend wurde die Mischung mit einer solchen Menge Diawasser verdünnt, dass die Gehalte an Proteinen und Lactose halbiert waren (5 Gew.-% Proteine, 2,3 Gew.-% Lactose). Diese Mischung wurde mit Milchsäurebakterien gemäß Mischung (i) und Lab versetzt und bei 30 °C etwa 2 h gerührt. Anschließend wurde das Fermentationsprodukt in eine Zentrifuge gegeben und die Sauermolke als flüssiger Bestandteil abgetrennt. Die zurückgebliebene Quarkmasse wurde durch Zugabe von Sahne auf einen Fettgehalt von 40 Gew.-% in der Trockenmasse und einen Proteingehalt von 12 Gew.- % eingestellt. Die Sauermolke wies noch einen Rest-Lactosegehalt von 1,7 Gew.-% auf.

## Patentansprüche

1. Verfahren zur Herstellung von Sauermolke, die einen Lactosegehalt von 1,0 bis 2,0 Gew.-% und vorzugsweise von 1,5 bis 1,8 Gew.-% aufweist, umfassend oder bestehend aus den folgenden Schritten:
(a) Bereitstellen einer Magermilch;
(b) Ultrafiltration der Magermilch unter Erhalt einer lactosereichen Fraktion als erstem Permeats P1 und eines Milchproteinkonzentrats als erstem Retentats R1;
(c) Umkehrosmotische Behandlung des Permeats P1 aus Schritt (b) unter Erhalt von Diawasser als zweitem Permeat P2 und eines Milchproteinkonzentrats als zweitem Retentat R2;
(d) erstes Standardisieren des Milchproteinkonzentrats R1 aus Schritt (b) durch Zugabe von Magermilch;
(e) zweites Standardisieren der Mischung aus Schritt (d) durch Zugabe von Diawasser P2 aus Schritt (c);
(f) Fermentation der zweiten Mischung aus Schritt (e) in an sich bekannter Weise; sowie
(g) Separation des Fermentationsproduktes aus Schritt (f) in Frischkäse und Sauermolke.

2. Verfahren nach Anspruch 1, **dadurch gekennzeichnet, dass** man eine Magermilch einsetzt, die einen Proteingehalt im Bereich von 3,0 bis 3,5 Gew.-% aufweist.

3. Verfahren nach den Ansprüchen 1 und 2, **dadurch gekennzeichnet, dass** man die Ultrafiltration mit einer Membran durchführt, die eine mittlere Porengröße von 1.000 bis 50.000 Dalton aufweisen.

4. Verfahren nach mindestens einem der Ansprüche 1 bis 3, **dadurch gekennzeichnet, dass** man die Ultrafiltration bei einer Temperatur im Bereich von 10 bis 55 °C durchführt.

5. Verfahren nach mindestens einem der Ansprüche 1 bis 4, **dadurch gekennzeichnet, dass** man die Umkehrosmose mit einem Konzentrierungsfaktor von 2 bis 100 durchführt.

6. Verfahren nach mindestens einem der Ansprüche 1 bis 5, **dadurch gekennzeichnet, dass** man die Umkehrosmose bei einer Temperatur im Bereich von 10 bis 55 °C durchführt.

7. Verfahren nach mindestens einem der Ansprüche 1 bis 6, **dadurch gekennzeichnet, dass** man bei der ersten Standardisierung in Schritt (d) so viel Magermilch zusetzt, so dass die erste Mischung anschließend einen Proteingehalt von 8 bis 12 Gew.-% und einen Lactosegehalt von 4,5 bis 5,0 Gew.-% aufweist

8. Verfahren nach Anspruch 6, **dadurch gekennzeichnet, dass** man so viel Magermilch zusetzt, so dass die erste Mischung anschließend einen Proteingehalt von 10 Gew.-% und einen Lactosegehalt von 4,7 Gew.-% aufweist.

9. Verfahren nach mindestens einem der Ansprüche 1 bis 8, **dadurch gekennzeichnet, dass** man bei der zweiten Standardisierung in Schritt (e) so viel Diawasser zusetzt, so dass die zweite Mischung einen Proteingehalt von 4 bis 6 Gew.-% und einen Lactosegehalt von 2,25 bis 2,5 Gew.-% aufweist.

10. Verfahren nach Anspruch 9, **dadurch gekennzeichnet, dass** man so viel Diawasser zusetzt, so dass die zweite Mischung einen Proteingehalt von 5 Gew.-% und einen Lactosegehalt von 2,3 bis 2,4 Gew.-% aufweist.

11. Verfahren nach mindestens einem der Ansprüche 1 bis 10, **dadurch gekennzeichnet, dass** man die Fermentation bei einer Temperatur im Bereich von 18 bis 35 °C durchführt.

## Claims

1. A process for the production of acid whey having a lactose content of 1.0 to 2.0% by weight and preferably of 1.5 to 1.8% by weight, comprising or consisting of the following steps:
(a) providing a skimmed milk;
(b) ultrafiltration of the skim milk to obtain a lactose-rich fraction as first permeate P1 and a milk protein concentrate as first retentate R1;
(c) reverse osmotic treatment of the permeate P1 from step (b) to obtain diawater as second permeate P2 and a milk protein concentrate as second retentate R2;
(d) first standardizing the milk protein concentrate R1 from step (b) by addition of skim milk;
(e) second standardizing the mixture from step (d) by addition of diawater P2 from step (c);
(f) fermentation of the second mixture from step (e) in a manner known per se; and
(g) separation of the fermentation product from step (f) into cream cheese and acid whey.

2. Process according to claim 1, **characterized in that** a skimmed milk is used which has a protein content in the range from 3.0 to 3.5% by weight.

3. Process according to claims 1 and 2, **characterized in that** the ultrafiltration is carried out with a membrane having an average pore size of 1,000 to 50,000 daltons.

4. Process according to at least one of claims 1 to 3, **characterized in that** the ultrafiltration is carried out at a temperature in the range from 10 to 55°C.

5. Process according to at least one of claims 1 to 4, **characterized in that** the reverse osmosis is carried out with a concentration factor of 2 to 100.

6. Process according to at least one of Claims 1 to 5, **characterized in that** the reverse osmosis is carried out at a temperature in the range from 10 to 55°C.

7. A process according to at least one of claims 1 to 6, **characterized in that** during the first standardization in step (d) so much skimmed milk is added that the first mixture subsequently has a protein content of 8 to 12% by weight and a lactose content of 4.5 to 5.0% by weight.

8. Process according to claim 6, **characterized in that** so much skimmed milk is added that the first mixture subsequently has a protein content of 10% by weight and a lactose content of 4.7% by weight.

9. Process according to at least one of claims 1 to 8, **characterized in that** in the second standardization in step (e) so much diawater is added that the second mixture has a protein content of 4 to 6% by weight and a lactose content of 2.25 to 2.5% by weight.

10. Process according to claim 9, **characterized in that** so much diawater is added so that the second mixture has a protein content of 5% by weight and a lactose content of 2.3 to 2.4% by weight.

11. Process according to at least one of claims 1 to 10, **characterized in that** the fermentation is carried out at a temperature in the range from 18 to 35°C.

## Revendications

1. Procédé pour la préparation de lactosérum acide, qui présente une teneur en lactose de 1,0 à 2,0% en poids et de préférence de 1,5 à 1,8% en poids, comprenant ou constitué par les étapes suivantes :
(a) mise à disposition d'un lait maigre ;
(b) ultrafiltration du lait maigre avec obtention d'une fraction riche en lactose en tant que premier perméat P1 et d'un concentrat de protéines du lait en tant que premier rétentat R1 ;
(c) traitement par osmose inverse du perméat P1 de l'étape (b) avec obtention d'eau d'osmose inverse en tant que deuxième perméat P2 et d'un concentrat de protéines du lait en tant que deuxième rétentat R2 ;
(d) première standardisation du concentrat de protéines du lait R1 provenant de l'étape (b) par addition de lait maigre ;
(e) deuxième standardisation du mélange de l'étape (d) par addition d'eau d'osmose inverse P2 de l'étape (c) ;
(f) fermentation du deuxième mélange de l'étape (e) de manière connue en soi ; ainsi que
(g) séparation du produit de fermentation de l'étape (f) en fromage frais et en lactosérum acide.

2. Procédé selon la revendication 1, **caractérisé en ce qu'**on utilise un lait maigre, qui présente une teneur en protéines dans la plage de 3,0 à 3,5% en poids.

3. Procédé selon les revendications 1 et 2, **caractérisé en ce qu'**on réalise l'ultrafiltration à l'aide d'une membrane qui présente une dimension moyenne de pore de 1000 à 50.000 daltons.

4. Procédé selon au moins l'une quelconque des revendications 1 à 3, **caractérisé en ce qu'**on réalise l'ultrafiltration à une température dans la plage de 10 à 55°C.

5. Procédé selon au moins l'une quelconque des revendications 1 à 4, **caractérisé en ce qu'**on réalise l'osmose inverse à un facteur de concentration de 2 à 100.

6. Procédé selon au moins l'une quelconque des revendications 1 à 5, **caractérisé en ce qu'**on réalise l'osmose inverse à une température dans la plage de 10 à 55°C.

7. Procédé selon au moins l'une quelconque des revendications 1 à 6, **caractérisé en ce que**, lors de la première standardisation dans l'étape (d), on ajoute une quantité de lait maigre telle que le premier mélange présente ensuite une teneur en protéines de 8 à 12% en poids et une teneur en lactose de 4,5 à 5,0% en poids.

8. Procédé selon la revendication 6, **caractérisé en ce qu'**on ajoute une quantité de lait maigre telle que le premier mélange présente ensuite une teneur en protéines de 10% en poids et une teneur en lactose de 4,7% en poids.

9. Procédé selon au moins l'une quelconque des revendications 1 à 8, **caractérisé en ce que**, lors de la deuxième standardisation dans l'étape (e), on ajoute une quantité d'eau d'osmose inverse telle que le deuxième mélange présente une teneur en protéines de 4 à 6% en poids et une teneur en lactose de 2,25 à 2,5% en poids.

10. Procédé selon la revendication 9, **caractérisé en ce qu'**on ajoute une quantité d'eau d'osmose inverse telle que le deuxième mélange présente une teneur en protéines de 5% en poids et une teneur en lactose de 2,3 à 2,4% en poids.

11. Procédé selon au moins l'une quelconque des revendications 1 à 10, **caractérisé en ce qu'**on réalise la fermentation à une température dans la plage de 18 à 35°C.
